# EUROPEAN PATENT APPLICATION

(11) **EP 4 755 729 A1**
(43) Date of publication of application: **10.06.2026**
(21) Application number: 25220887.1
(22) Date of filing: 04.12.2025
(51) Int. Cl.: B60S 1/04

(54) **MOTOR VEHICLE WITH WINDSHIELD WIPERS HAVING A REST POSITION ON THE HOOD**

(30) Priority: 09.12.2024 IT 202400027924
(71) Applicant: FERRARI S.p.A., 41100 Modena (IT)
(72) Inventor: CURATOLA, Rubens Mauro, 41100 MODENA (IT); CIVERA, Stefano, 41100 MODENA (IT); VIGNA, Benedetto, 41100 MODENA (IT)
(74) Representative: Studio Torta S.p.A.

(57) **Abstract**

A motor vehicle (1) includes a longitudinal axis (X), a window (3) arranged transversally with respect to the longitudinal axis, and a hood (2) substantially extending as a longitudinal extension of an upper portion (3b) of the window (3), with the hood and said upper portion (2, 3b) extending longitudinally in succession and flush with each other according to a profile (5) that is continuous in at at least one domain of the longitudinal axis (X) between a first intermediate point of the hood (2) and a second intermediate point of said upper portion (3b), wherein the motor vehicle further comprises at least one windshield wiper (25) with a wiper blade (26) movable between a first position and a second position, wherein the wiper blade (26), in the first and second position, is entirely aligned above the hood (2) and entirely in contact with the window (3), respectively.

## Description

### CROSS-REFERENCE TO RELATED APPLICATIONS

This patent application claims priority from Italian patent application no. 102024000027924 filed on December 9, 2024, the entire disclosure of which is incorporated herein by reference.

### TECHNICAL FIELD

The invention relates to a motor vehicle and more in particular to a motor vehicle with a window and a hood having a shape such as to define a natural longitudinal extension of the window, namely a window and a hood having respective longitudinally adjacent portions with substantially equal curvature and arranged flush with one another.

### PRIOR ART

As it is known, some motor vehicles have a hood arranged flush with the windshield and having a curvature at its rear edge that is approximately equal or in any case similar to the curvature of the longitudinally adjacent portion of the windshield.

In this way, considering anyway the possible presence of a gap or demarcation area between the windshield and the hood, they substantially extend along one single continuous surface, so that the front aerodynamic flow that hits the hood during use is not abruptly deflected from the front portion of the windshield adjacent to the hood, but rather continues longitudinally on the surface of the windshield.

With this configuration of the hood and windshield there is a first drawback, whereby the necessary windshield wipers are particularly exposed, thus worsening the aerodynamic performance of the motor vehicle and even causing the generation of aerodynamic noise.

Furthermore, a second drawback lies in the fact that the exposure of the windshield wipers significantly jeopardizes the overall aesthetics of the front portion of the motor vehicle.

Therefore, at least one of the drawbacks set forth above needs to be dealt with or eliminated.

An object of the invention is to fulfil the need discussed above, preferably in a simple and repeatable fashion.

### DESCRIPTION OF THE INVENTION

Said object is reached by a motor vehicle as defined in claim 1.

The dependent claims define special embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein:
- figure 1 is a plan view of a motor vehicle according to the invention,
- figure 2 is a perspective view, on a larger scale, of a front portion of the motor vehicle of figure 1,
- figures 3-4 are similar to figure 2 and show the motor vehicle according to respective operating conditions distinct from the one of figure 2.
- figure 5 is a cross section, according to a longitudinal plane, of the front portion of figure 2 at a hinge axis of a windshield wiper of the motor vehicle, and
- figure 6 is a perspective view of the windshield wiper, on a larger scale.

### EMBODIMENTS OF THE INVENTION

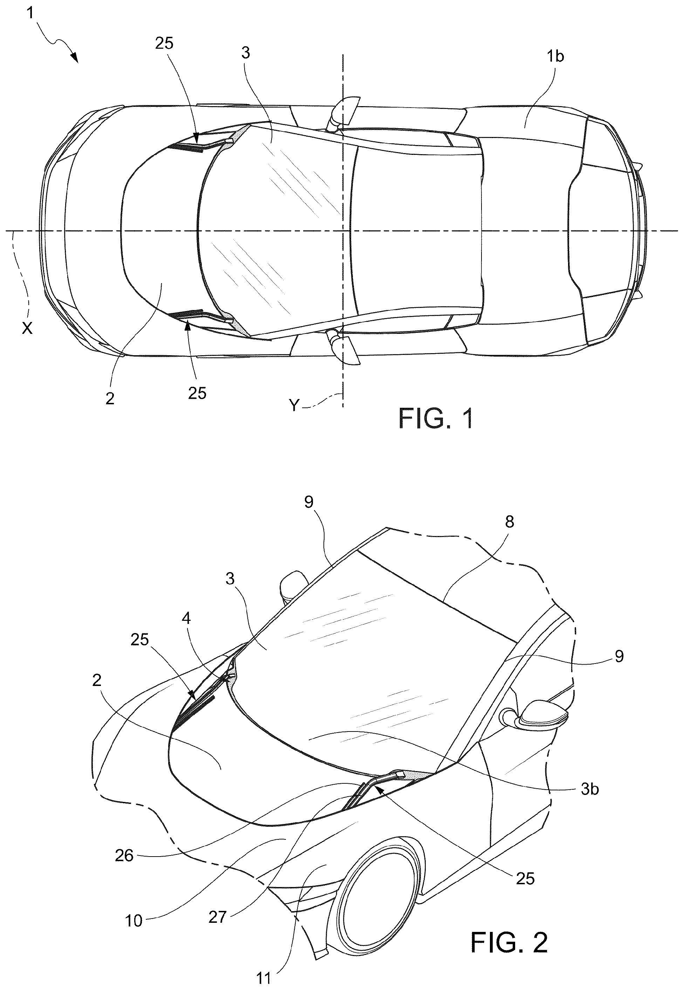

In figure 1, reference number 1 is used to indicate, as a whole, a motor vehicle.

The motor vehicle 1 has a longitudinal axis X, in particular coinciding with a roll axis of the motor vehicle 1. The longitudinal axis X belongs to a longitudinal plane, which is orthogonal to an axis Y, in turn coinciding in particular with a pitch axis of the motor vehicle 1; the axis Y is horizontal and orthogonal to the axis X.

Therefore, the longitudinal plane is vertical and preferably defines a middle plane for the motor vehicle 1.

The motor vehicle 1 comprises a bodywork 1b, in turn comprising a plurality of panels or, more specifically, by way of example but not limited to, metal plates and windows defining respective outer surfaces of the motor vehicle 1.

The bodywork 1b is carried, as normally occurs in motor vehicles, by a frame 1c of the motor vehicle 1.

More generally, the bodywork 1b and the frame 1c form or are part of a body of the motor vehicle 1.

The motor vehicle 1 comprises a hood 2 and a window (forming part of the bodywork 1b or, more precisely, of the aforesaid panels), which is arranged transversally with respect to the axis X, or more in particular a windshield 3, both forming part of a front portion of the motor vehicle 1. The windshield 3 represents an example of window, which may be replaced throughout the description by a rear window or another window, considering the necessary adaptations, where necessary. Therefore, hereinafter, the term windshield 3 will always be replaceable with the more generic term window 3 or with the rear window.

Similarly, although the hood 2 specifically is a front hood, it could also be a rear hood or a rear door.

Anyway, according to a non-limiting embodiment, the hood 2 is (e.g. according to the most general definition of a hood in the automotive industry) a panel (e.g. of the bodywork 1b) coupled or having at least one portion coupled to the frame 1c or carried by the frame 1c in a movable manner with respect to the frame 1c.

Furthermore, for greater clarity, from now on, expressions such as front, rear, in front of, behind and the like refer to the axis X and, more specifically, to the normal travel direction of the motor vehicle 1.

The longitudinal axis X could be oriented like the normal travel direction, whereby it extends from the rear of the motor vehicle 1 towards the front portion of the motor vehicle 1.

The hood 2 is arranged in front of the windshield 3 and more specifically follows the windshield 3 in a position longitudinally adjacent to that of the windshield 3, according to the axis X. Clearly, in case the windshield 3 were replaced by the rear window, the hood would be arranged behind the rear window.

The hood 2 and the windshield 3 are, in particular, separated from one another along the axis X by a gap or slit or separation line 4. In other words, the gap 4 extends or is arranged longitudinally between the hood 2 and the windshield 3.

The hood 2 can be arranged so as to cover an underlying compartment (not shown), which can be, for example, a compartment for accommodating an engine or an object compartment.

Herein, according to a non-limiting embodiment, the hood 2 or a portion thereof (e.g. the one mentioned above) is movable with respect to the frame 1c between a closed position and an open position to close and make the underlying compartment accessible, respectively.

According to a non-limiting embodiment, the hood 2 or a portion thereof (e.g. the one mentioned above) is movable relative to the windshield 3.

According to a non-limiting embodiment, the windshield 3 is fixed relative to the frame 1c.

According to a non-limiting embodiment, the hood 2 is separate or spaced apart from the windshield 3.

The hood 2 or, more generally, the motor vehicle 1 has at least one configuration, in which it is substantially arranged as a longitudinal, in particular front, extension of a portion 3b of the windshield 3.

The term "substantially" herein indicates, in particular, the presence of the gap 4 between the hood 2 and the portion 3b along the axis X, namely longitudinally; the dimension or minimum length (namely, the shortest one) of the gap 4 along the axis X can be in the order of millimetres and, in any case, it measures no more than 99 millimetres, whereby it is negligible with respect to the dimensions of the hood 2 and of the windshield 3.

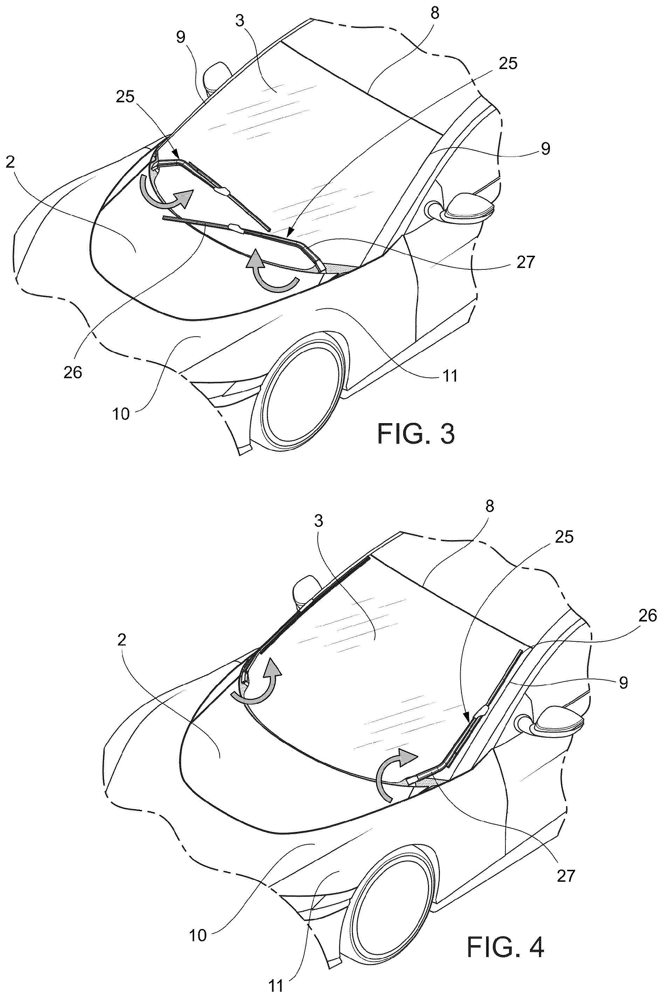

Along the axis X or more precisely on the longitudinal plane (figure 3), the hood 2 and the portion 3b are arranged flush with one another. In other words, the hood 2 and the upper portion 3b are aligned with one another in the zone of the gap 4; in particular, the alignment occurs according to a plane that is inclined with respect to the axis X.

Furthermore, the hood 2 and the portion 3b extend longitudinally one after the other, namely in succession, according to a profile 5 lying in particular on the longitudinal plane. On the longitudinal plane, the profile 5 can be treated as a function of a variable associated with the axis X, possibly according to any one of the two possible opposite directions of the axis X (from the front to the rear of the motor vehicle 1 or vice versa).

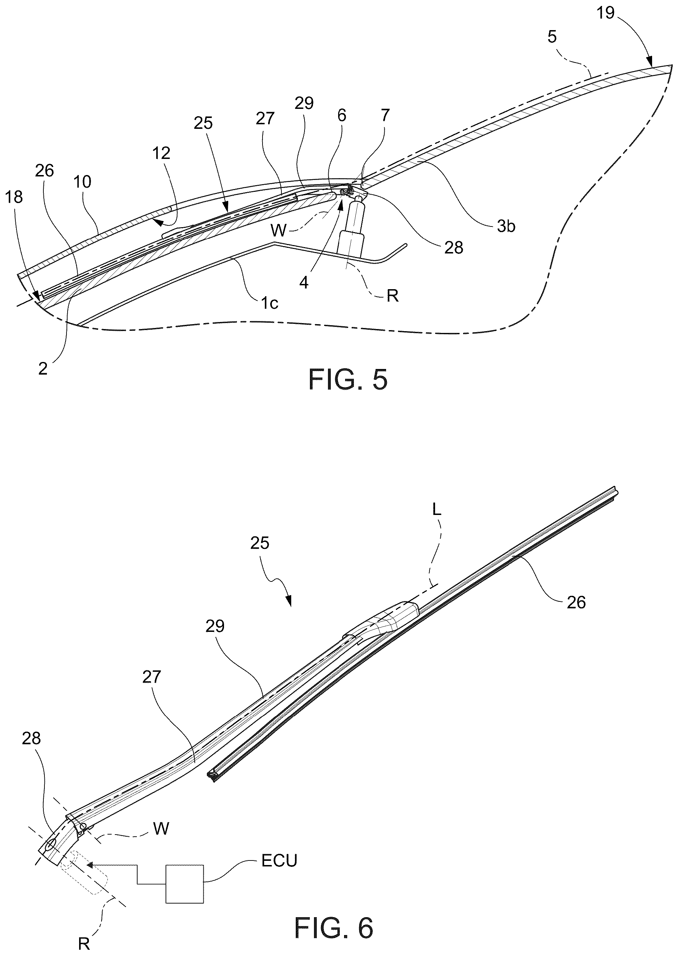

The profile 5 runs along the outer surfaces 18, 19 of the hood 2 and of the portion 3b (despite being represented in figure 5 with a dashed line that is raised with respect to said outer surfaces 18, 19, for a mere displaying matter, that is, so as not to be confused with the contour lines of the hood 2 and of the windshield 3).

For example, since the hood 2 and the portion 3b are arranged flush with one another, the outer surfaces 18, 19 are also arranged flush with one another.

In general, the hood 2 and the portion 3b have or comprise the outer surfaces 18, 19, respectively, for example independently of the profile 5 or of other characteristics of the motor vehicle 1.

For example, by definition, the outer surfaces 18, 19 have at least respective surface portions directly exposed to the external environment of the motor vehicle 1 or are directly exposed (e.g. entirely) to the external environment of the motor vehicle 1. In other words, the surfaces 18, 19 are the outermost surfaces of the hood 2 and of the portion 3b, respectively.

Alternatively or in addition, the surfaces 18, 19 face upwards and/or are the highest or upper surfaces (with the highest vertical height) of the hood 2 and of the portion 3b, respectively.

Alternatively or in addition, the surface 18 is part of or defines an outer skin of the hood 2.

According to a non-limiting embodiment, the surface 18 (flush with the surface 19) or the portion of the surface 18 flush with the surface 19 is an entirely solid surface, namely a completely closed and continuous surface, namely without openings or holes or grids or meshes.

The surfaces 18, 19 form an approximately straight angle, i.e. of about 180°, in particular between 170° and 190°.

More in detail, the portion 3b, the gap 4 and the hood 2 follow one another, in this order, along the profile 5, in particular without further elements or empty spaces between them, namely they follow one another in a tight sequence.

Specifically, in a non-limiting manner, the portion 3b defines a lower end or edge of the windshield 3.

The profile 5 is continuous in at at least one domain or interval or segment of the axis X between an intermediate point of the hood 2 and an intermediate point of the portion 3b.

More precisely, an intermediate point is a point that does not lie on the edge of the hood 2 or on the edge of the portion 3b, whereby an intermediate point is spaced apart, in particular towards the inside of the relative component, according to the axis X (in particular on the longitudinal plane), from an edge 6, in particular a rear edge, of the hood 2 or from an edge 7 of the portion 3b, in particular coinciding with the lower edge of the windshield 3.

However, clearly, the profile 5 goes through the edges 6, 7, as well as through the gap 4.

The windshield 3 extends longitudinally between the edge 7, in particular the front edge, and an edge 8, in particular a rear edge, opposite according to the axis X, as well as laterally between side edges 9.

The hood 2 extends longitudinally between the rear edge 6 and an opposite edge (not shown), in particular a front edge, opposite according to the axis X.

The gap 4 is defined longitudinally between the edges 6, 7.

Furthermore, the profile 5 preferably is globally continuous along the entire axis X.

The profile 5 specifically has a substantially constant slope or curvature at least at the aforementioned domain or globally along the axis X. Alternatively, a difference between the curvatures of the profile 5 at the edge 6 and at the edge 7 or around them on the axis X is limited by a threshold, in particular such that a front aerodynamic flow A, during the use of the motor vehicle 1, runs along the profile 5 without significant losses at the gap 4.

In practice, the profile 5 does not rise at the edge 7 of the portion 3b.

In other words, mathematically speaking, the profile 5 is derivable or at least Lipschitz continuous (for example, since it has a limited derivative with respect to the axis X) at the domain or globally along the entire axis X.

Alternatively or in addition, the profile 5 could maintain its concavity (i.e. being always concave or convex) at the domain or globally along the entire axis X. In other words, the profile 5 could be free of inflection points, at least in the domain or along the entire axis X.

The profile 5 could even be straight in at the domain and, even more specifically, it could be globally straight, although not necessarily.

In particular, the profile 5 extends upwards, in the sense that it specifically extends between a front end and a rear end having a (vertical) height greater than the front end. If the windshield 3 were replaced by the rear window, the profile 5 would clearly extend in the opposite direction, downwards.

Going from the front to the rear, along the axis X, the profile 5 is increasing (more specifically, it is strictly increasing) at the domain or, more specifically, globally along the entire axis X. If the windshield 3 were replaced by the rear window, the profile 5 would clearly, on the contrary, be decreasing.

Preferably, the bodywork 1b or, more generally, the motor vehicle 1 comprises, in addition to the hood 2, a further element or panel (specifically, a sheet metal) 10, more in particular defined by a portion of a fender 11, arranged or extending above a zone of the hood 2 so as to cover or overlap said zone from above.

Consequently, according to a non-limiting embodiment, the panel 10 extends above the surface 18 or a surface portion of the surface 18.

In other words, for example, a projection of the panel 10 according to an axis orthogonal to the surface 18 (namely, an orthogonal projection of the panel 10) onto the surface 18 lies entirely within the perimeter of the hood 2 and/or defines the aforementioned zone of the hood 2.

In practice, the panel 10 creates a sort of canopy above or for the aforementioned zone or the surface portion of the surface 18.

In particular, the zone covered by the panel 10 is a perimeter zone of the hood 2, namely comprising at least part of the perimeter of the hood 2 and externally delimited by said part of the perimeter of the hood 2.

For example, the panel 10 has an inner surface directly facing - downwards - the surface 18 or the surface portion of the surface 18. In particular, the panel 10 also has an upper surface opposite the lower surface and facing upwards, so as to be directly exposed to the external environment of the motor vehicle 1.

The fender 11 is part of the motor vehicle 1 or of the bodywork 1b.

In particular, in addition to the panel 10, the fender 11 at least partly laterally faces, according to the axis Y, the external environment next to the motor vehicle 1 according to the axis Y.

Alternatively or in addition, the fender 11 is part of a sidewall of the motor vehicle 1 or the bodywork 1b, namely it is a side element of the motor vehicle 1 or the bodywork 1b.

Alternatively or in addition, the fender 11 has, in addition to the panel 10, another portion extending vertically from the panel 10, in particular downwards and/or lower than the panel 10, in continuity with the panel 10 so as to laterally face the external environment next to the motor vehicle according to the axis Y.

For example, the panel 10 and the other portion form one single piece or one single panel, for example so that the panel 10 and the other portion of the fender 11 are integral to one another and joined to one another in a continuous and/or indistinguishable manner.

Alternatively or in addition, the fender 11 defines at least one edge of a wheel arch of the motor vehicle 1 or the bodywork 1b, the wheel arch defining - below - a relative wheel well to accommodate a wheel of the motor vehicle 1.

Alternatively or in addition, the fender 11 is arranged so as to directly cover or face (in particular downwards) a relative wheel well to accommodate a wheel of the motor vehicle 1.

For example, the perimeter of the hood 2 is a closed line defining or defined by the outer contour or boundary of the hood 2 or of the surface 18. Alternatively or in addition, the perimeter of the hood 2 is a closed line delimiting the hood 2 or the surface 18. Alternatively or in addition, the perimeter of the hood 2 is a closed line within which the hood 2 or the surface 18 is defined or delimited.

Specifically, the edge 6 of the hood 2 is uncovered by the panel 10; alternatively or in addition, a longitudinal end of the hood 2 (specifically the front one) is completely covered by the panel 10, whereas the other opposite longitudinal end (specifically the rear one) is at least partially or even completely uncovered by the panel 10. In other words, the panel 10 delimits an opening aligned above the edge 6 or uncovering the edge 6. More generally, the panel 10 delimits an opening aligned above a portion of the hood 2 or uncovering the same portion of the hood 2.

For example, the perimeter of the hood 2 comprises all the edges of the hood 2, in particular including the edge 6 and/or the edge of the opposite longitudinal end that is completely covered by the panel 10.

For example, the perimeter of the hood 2 also is the perimeter of the surface 18.

Preferably, but not necessarily, the panel 10 or hence, specifically, the fender 11 is fixed with respect to the hood 2.

In particular, the panel 10 or the fender 11 form, with the hood 2, one single piece, more in particular seamlessly; that is, alternatively or in addition, the panel 10 and the hood 2 are coupled to each other directly and integrally.

Hence, the panel 10 and the hood 2 ideally intersect or meet at an ideal or virtual intersection curve or line.

Therefore, specifically, the aforementioned part of the perimeter of the hood 2 defines the ideal or virtual intersection curve or line between the hood 2 and the panel 10.

For example, in other words, the perimeter of the hood 2 comprises the ideal (or virtual) intersection curve or the ideal (or virtual) intersection curve is part of the perimeter of the hood 2.

For example, in other words, a part of the perimeter of the hood 2 is defined by the ideal (or virtual) intersection curve or the ideal (or virtual) intersection curve is defined by a part of the perimeter of the hood 2.

Preferably, the panel 10 and the hood 2 define therebetween (more precisely, vertically) a cavity 12 which is open, more in particular laterally open towards the centre of the hood 2. In particular, the panel 10 and the hood 2 form a profile that delimits the cavity 12 and is C-shaped or concave towards the centre of the hood 2.

In other words, the panel 10 and the hood 2 practically form a cove or niche (in particular, at a perimeter zone of the hood 2) defined vertically between the hood 2 or the surface 18 and the panel 10; in particular, the cove is defined by the cavity 12.

Alternatively or in addition, the cavity 12 is defined precisely or directly (in particular vertically) between the panel 10 or its inner surface and the surface 18 or the surface portion of the surface 18. In other words, the panel 10 or its inner surface and the surface 18 or the surface portion of the surface 18 delimit the cavity 12 above and below, respectively.

Alternatively or in addition, the panel 10 or its inner surface and the surface 18 or the surface portion of the surface 18 define the upper boundary and the lower boundary of the cove, respectively.

The motor vehicle 1 further comprises at least one windshield wiper 25 (specifically two windshield wipers 25) comprising a wiper blade 26 movable on the windshield 3, particularly in a sliding manner.

The wiper blade 26 is movable between a first position and a second position, namely it has a stroke between the first position and the second position. More precisely, the wiper blade 26 is constrained with respect to the frame 1c so as to be able to move along its stroke.

In the first position, the wiper blade 26 is entirely aligned with or, more in particular, lies on the hood 2 or the outer surface 18, namely it is aligned with the hood 2 or the outer surface 18 according to an axis orthogonal to the outer surface 18. In other words, the (in particular, entire) wiper blade 26 in the first position covers a strip or portion of the hood 2 or of the outer surface 18 from above. In particular, the wiper blade 26 in the first position is in contact with the hood 2 or with the outer surface 18, more in particular entirely.

According to a non-limiting embodiment, the wiper blade 26 in the first position entirely faces the hood 2 or the outer surface 18 from above according to the axis orthogonal to the outer surface 18, namely the entire projection according to the axis orthogonal to the surface 18 or the entire orthogonal projection of the wiper blade 26 in the first position onto the hood 2 or onto the outer surface 18 lies entirely on the hood 2 or on the surface 18 or within the perimeter of the hood 2 or of the surface 18. This is the direct and unambiguous consequence of the fact that the wiper blade 26 is entirely aligned above the hood 2 or the surface 18.

In other words, according to a non-limiting embodiment, each point of the wiper blade 26 (namely, each one of all the points of the wiper blade 26) in the first position can geometrically be projected according to a corresponding projection onto the hood 2 along a corresponding axis going through said point and orthogonal to the hood 2 or to the surface 18, such that the corresponding projection results in a further point of the hood 2 or of the surface 18, namely a further point within the perimeter of the hood 2 or of the surface 18 (in particular, the corresponding axis belongs to a plane orthogonal to the axis Y, namely to a vertical plane). This is the direct and unambiguous consequence of the fact that the wiper blade 26 is entirely aligned above the hood 2 or the surface 18.

In practice, according to a non-limiting embodiment, at least "a shadow" or geometric or orthogonal projection from the above of the wiper blade 26 in the first position downwards according to the axis orthogonal to the hood 2 or to the surface 18 entirely falls from above onto the hood 2 or onto the surface 18 within the perimeter of the hood 2 or of the surface 18. This is the direct and unambiguous consequence of the fact that the wiper blade 26 is entirely aligned above the hood 2 or the surface 18.

Alternatively or in addition, the wiper blade 26 in the first position is entirely separate or spaced apart from the windshield 3 and/or arranged entirely outside the area immediately above the windshield 3 or entirely positioned at the front (or at the back or behind, in case the windshield 3 is replaced by the rear window) with respect to the windshield 3 according to the axis X. This is the direct and unambiguous consequence of the fact that the wiper blade 26 is entirely aligned above the hood 2 or the surface 18.

According to a non-limiting embodiment, the wiper blade 26 in the first position overlaps the entire hood 2 or the surface 18 according to the axis orthogonal to the hood 2 or to the surface 18.

According to a non-limiting embodiment, the hood 2 extends, according to a thickness thereof, from a lower surface (not shown) to the surface 18 and is entirely delimited between the lower surface and the surface 18 according to a thickness direction. Herein or in general, any point of the wiper blade 26 (namely, each one of all the points of the wiper blade 26) in the first position is above the surface 18 along a corresponding projection line going through the same point and orthogonal to the surface 18 (for example, the projection line belongs to a plane orthogonal to the axis Y, namely to a vertical plane).

In the second position, the wiper blade 26 is entirely in contact with the windshield 3, whereby it is in particular aligned with or lies on the windshield 3.

More in detail, the windshield wiper 25 comprises an arm 27 pivoted around a pivot axis R, in particular having at least one vertical component. In particular, the pivot axis R is located at the gap 4, namely it vertically crosses or vertically goes through the gap 4.

Therefore, the arm 27 is rotatable or is pivoted at least between a first and a second angular position defined by respective values of an angle of rotation of the arm 27 around the pivot axis R. In particular, the first and the second angular position of the arm 27 define the respective ends or limit stops of an angular excursion of the arm 27.

The first and second angular positions of the arm 27 correspond to the first and second positions of the wiper blade 26.

Specifically, the arm 27 longitudinally extends along an axis L starting from the axis R with a radial (more in particular, orthogonal) segment with respect to the axis R.

The wiper blade 26 is coupled to the arm 27, in particular at an end of the arm 27 opposite (according to the axis L) the end pivoted around the pivot axis R of the arm 27. Specifically, the wiper blade 26 is fixed to the arm 27, for example in known ways, in particular by means of a snap-fit coupling.

In the second angular position of the arm 27, the wiper blade 26 is carried by the arm 27 into (sliding) contact with the windshield 3 by the arm 27.

Through rotation of the arm 27, the wiper blade 26 is movable in a sliding manner on the windshield 3 between a second position (figure 4) and a third position (figure 3), in particular corresponding to the second angular position defined above and to a third angular position of the arm 27, respectively.

In other words, the wiper blade 26 is in contact with the windshield 3 in a sliding manner between the second and third positions.

The third position is intermediate with respect to the first and second positions, as well as, in particular, the third angular position is intermediate between the first and second angular positions.

The wiper blade 26 is kept in contact with the windshield 3 between the first and second positions, in particular by means of a thrust exerted by the arm 27 upon the wiper blade 26 towards the windshield 3.

In other words, between the third and second angular positions, the arm 27 is configured to push the wiper blade 26 on the windshield 3, so as to keep the wiper blade 26 in sliding contact (i.e. in a sliding manner) with the windshield 3.

In the third position, the wiper blade 26 (namely, at least a portion thereof) is placed (in particular, by means of the rotation of the arm 27, namely when the arm 27 is in the third angular position or reaches the latter) at or next to the gap 4, i.e. at a boundary between the windshield 3 and the hood 2, while particularly remaining at least partly in contact with the windshield 3 (or, more precisely, with its edge 7)

For example, the wiper blade 26 could have a width (transversely to the axis L) greater than the length or dimension along the axis X of the gap 4, whereby, in other words, alternatively or in addition, the wiper blade 26 in the third position could partially be in the gap 4 or aligned above the gap 4 and/or even in contact with the hood 2, the latter being arranged flush with the windshield 3 and with the gap 4 between the windshield 3 and the hood 2.

In the first angular position of the arm 27, the wiper blade 26 is located in the first position above the hood 2 or the surface 18 and preferably (but not necessarily) in contact with the hood 2 or the surface 18 (in particular, entirely), more preferably in a sliding manner between the first and the third position.

Therefore, more in particular, by way of example but not limited to, between the first and the third angular position of the arm 27, the wiper blade 26 lies on the hood 2 or on the surface 18.

In other words, preferably (but not necessarily), between the first and the third angular position, the arm 27 is configured to push the wiper blade 26 on the hood 2 or on the surface 18, so as to keep the wiper blade 26 in sliding contact (i.e. in a sliding manner) with the hood 2 or on the surface 18.

In practice, with a rotation of the arm 27 from the third to the first angular position, the wiper blade 26 moves past or overcomes the gap 4 so as to then move all aligned above the hood 2, preferably (but not necessarily) maintaining sliding contact with the hood 2 or the surface 18, until it reaches the first position.

To sum up, the stroke of the wiper blade 26 is defined between the first and second positions corresponding to the ends of the angular stroke or excursion of the arm 27 between the first and second angular positions.

The angular stroke or excursion of the arm 27 between the first and second angular positions preferably is greater than 150°, more preferably greater than 170°, in particular between 170° and 200°.

Preferably, in the first position, namely correspondingly to the first angular position of the arm 27, the wiper blade 26 is arranged at least in part or optionally entirely (according to embodiments that are not shown herein) between the hood 2 or the surface 18 and the panel 10, for example vertically, namely, more in particular, in the cavity 12.

Consequently, a portion of the arm 27 can also be arranged between the hood 2 or the surface 18 and the panel 10, for example vertically, namely, more in particular, in the cavity 12, while the remaining portion of the arm 27 is optionally located outside the cavity 12.

In this way, the wiper blade 26 is at least partially covered from above by the panel 10 and, therefore, it conveniently does not affect or affects to a smaller extent the aerodynamics of the motor vehicle 1, in addition to being less visible from the outside of the motor vehicle 1.

The windshield wiper 25 and, more in particular, the arm 27 is, as a whole, elastic and preloaded to push or keep the wiper blade 26 in contact against the windshield 3 between the third and the second position, as well as preferably against the hood 2 or the surface 18 between the first and the third position.

The elasticity of the windshield wiper 25 causes the latter to be also yielding so as to adapt to the possible variable curvature of the windshield 3 and/or of the hood 2 or of the surface 18 in all points of the stroke of the wiper blade 26, with the wiper blade 26 kept in contact with the windshield 3 and/or the hood 2, respectively.

For example, the arm 27 comprises a more rigid or less flexible portion 28, which is actually pivoted around the axis R, and a more flexible portion 29 (compared to the portion 28), which is hinged to the portion 28 around an axis W, which is transversal to the axis L.

The wiper blade 26 is fixed to the portion 29 at an end of the portion 29 opposite the one hinged to the portion 28 (according to the axis L).

The preload of the arm 27 could be determined by one or more torsional springs (not shown) applied between the portions 28, 29 and configured to react with an elastic torque around the axis W against a lifting (or, more precisely, a rotation around the axis W to lift the portion 29) of the portion 29.

Without lacking generality, the hinge effect between the portions 28, 29 around the W axis could be achieved both with a physical hinge (as shown in the drawings) and virtually by increasing the flexibility of the portion 29 at the axis W.

The windshield wiper 25 further comprises a motor (not shown) controllable to drive the arm 27 in rotation around the axis R, in particular by setting the angle of rotation, between the first angular position and the second angular position. Therefore, the wiper blade 26 can be driven in movement or moved along its stroke, in particular by sliding on the windshield 3, between the third and second position (corresponding to the third and second angular position of the arm 27, respectively) and, preferably, by sliding on the hood 2 or the surface 18 between the first and third position (corresponding to the first and third angular position of the arm 27, respectively), by means of a control of the motor of the windshield wiper 25.

The motor vehicle 1 comprises a control unit ECU configured to control the windshield wiper 25 or, more precisely, its motor so as to drive in movement or move the wiper blade 26 along its stroke and/or between the first and the second position, or so as to drive in movement or move the arm 27 along its angular excursion between the first and the second angular position.

In practice, the control unit ECU controls (in particular, by means of the motor and/or the arm 27) a movement of the wiper blade 26 between the first position and the second position or, more precisely, a first movement portion between the first position and the third position and a second movement portion between the third position and the second position.

For example, the control unit ECU could control the windshield wiper 25 on the basis of an activation command from the driver or user of the motor vehicle 1, in particular that can be imparted by means of a suitable control device of the motor vehicle 1 (e.g. a button, a control on a screen, a lever, a knob and the like).

The arm 27 is preferably pivoted to the frame 1c of the motor vehicle 1.

Conveniently, the arm 27 is pivoted at the gap 4, whereby the portion 28 can fall below the level of the hood 2 or of the windshield 3 through the gap 4.

The wiper blade 26 in the third and second positions is located outside or externally to the cavity 12.

In other words, the stroke of the wiper blade 26 begins and ends or has its ends inside and outside the cavity 12, respectively.

More precisely, the windshield wiper 25, in particular in its entirety, is located outside the cavity 12, when the wiper blade 26 is in the second position.

Preferably, the movement of the wiper blade 26 (controlled by means of the control unit ECU) from the first position to the second position comprises the first movement portion between the first position and the third position and the second movement portion between the third position and the second position.

For example, the control unit ECU can be configured to control (by still controlling the windshield wiper 25 or, more precisely, its motor) the first portion with a speed of the wiper blade 26 different from and, in particular, lower than the second portion.

Once the wiper blade 26 reaches the second position, the control unit ECU could then continue to control the windshield wiper 25 so as to move the wiper blade 26 along a reduced stroke between the second position and the third position in a cyclical manner, i.e. continuously alternating a return movement from the second position to the third position and a forward movement from the third position to the second position, in particular until the control unit ECU receives a switch-off command (for example, which can be imparted by means of a suitable control device of the motor vehicle 1, preferably the same as the one used to impart the activation command), for example from the user.

Herein, in response to receiving the switch-off command, the control unit ECU controls the windshield wiper 25 so as to move the wiper blade 26 to the first position. Therefore, the first position or the first angular position defines a rest position of the windshield wiper 25.

In other words, after the first movement portion, the movement of the wiper blade 26 (controlled by means of the control unit ECU) can comprise a repeated or cyclical alternation of forward movement portions from the third position to the second position and return movement portions from the second position to the third position, namely further movement portions in succession along the reduced stroke.

Conveniently, the control unit ECU can control the movement of the wiper blade 26 along the reduced stroke similarly to the aforementioned second portion of the movement, namely with a different speed of the wiper blade 26 compared to the first portion of the movement.

What has been indicated so far can of course be applied to all the windshield wipers 25 of the motor vehicle 1.

Owing to the above, the advantages of the motor vehicle 1 according to the invention are evident.

With the wiper blade 26 in the rest position above the hood 2, the wiper blade 26 has a smaller impact on the aerodynamics of the motor vehicle.

Even more advantageously, with the wiper blade 26 stored in the cavity 12 or, more generally, between the panel 10 and the hood 2, the wiper blade 26 is more hidden and, therefore, it affects the aerodynamics of the motor vehicle 1 even less, in addition to being less visible and, hence, less impacting on the aesthetics of the motor vehicle 1.

In this way, aerodynamic noise due to windshield wipers in known motor vehicles is advantageously avoided or limited.

Finally, the motor vehicle 1 according to the invention can be subjected to changes and variants, which, though, do not go beyond the scope of protection set forth in the appended claims.

In particular, the number and shape of each one the components described and shown herein could be different, with particular reference to the shape of the profile 5.

Finally, the various embodiments disclosed herein can be combined with one another without any limitations, with particular reference to the various features individually described in the different paragraphs of the description. Each one of these features is independently applicable to each one of the disclosed embodiments.

## Claims

1. Motor vehicle (1) comprising
- a longitudinal axis (X),
- a window (3) arranged transversally to the longitudinal axis, and
- a hood (2) extending substantially as a longitudinal extension of a portion (3b) of the window (3) with the hood and said portion (2, 3b) extending longitudinally in succession and flush with each other according to a profile (5) continuous at at least one domain of the longitudinal axis (X) between a first intermediate point of the hood (2) and a second intermediate point of said portion (3b), the motor vehicle further comprising at least one
windshield wiper (25) with a wiper blade (26) movable between a first position and a second position, wherein the wiper blade (26) in the first and second positions is entirely aligned above the hood (2) and entirely in contact with the window (3), respectively.

2. The motor vehicle according to claim 1, wherein the windshield wiper (25) comprises an arm (27) pivoted about a pivot axis (R) between a first and a second angular position corresponding to the first and second positions of the wiper blade (26), respectively, the wiper blade (26) being coupled to the arm (27).

3. The motor vehicle according to claim 2, wherein the arm (27) is pivoted about a pivot axis (R) at a gap (4) arranged longitudinally between the hood (2) and the window (3).

4. The motor vehicle according to claim 2 or 3, wherein the arm (27) has an angular excursion between the first and second angular positions greater than 150°.

5. The motor vehicle according to any one of the preceding claims, wherein the wiper blade (26) is movable from the first position to the second position by passing through a third position intermediate with respect to the first and second positions, wherein the wiper blade (26) in the third position is at a boundary between the hood (2) and the window (3), the wiper blade (26) being in contact with the window (3) in a sliding manner between the second and third positions.

6. The motor vehicle according to claim 5, wherein the wiper blade (26) is in contact with the hood (2) in a sliding manner between the first and third positions.

7. The motor vehicle according to claim 5 or 6, further comprising a control unit (ECU) configured to control a movement of the wiper blade (26) between the first position and the second position, wherein the movement comprises a first movement portion from the first position to the third position and a repeated alternation of forward movement portions from the third position to the second position and return movement portions from the second position to the third position.

8. The motor vehicle according to any one of the claims 5 to 7, further comprising a control unit (ECU) configured to control a movement of the wiper blade (26) from the first position to the second position, wherein the movement comprises a first movement portion between the first position and the third position and a second movement portion between the third position and the second position, wherein the control unit (ECU) is configured to control the first movement portion with a speed of the wiper blade (26) different from and/or lower than the second movement portion.

9. The motor vehicle according to any one of the preceding claims, further comprising a panel (10) extending above a zone of the hood (2) to cover said zone from above, the wiper blade (26) being at least partially arranged in the first position between the hood (2) and the panel (10).

10. The motor vehicle according to claim 9, wherein said zone is a perimeter zone of the hood (2) comprising at least part of a perimeter of the hood (2) and externally delimited by said part of the perimeter of the hood (2).

11. The motor vehicle according to claim 9 or 10, wherein the panel (10) is defined by a portion of a fender (11) of the motor vehicle (1).

12. The motor vehicle according to any one of the claims from 9 to 11, wherein the panel (10) is fixed relative to the hood (2) and forms with the hood (2) a cavity (12) laterally open toward the centre of the hood (2).

13. The motor vehicle according to any one of the claims from 9 to 11, wherein the panel (10) forms with the hood (2) a single piece, whereby the panel (10) and the hood (2) ideally intersect in an ideal intersection curve.

14. The motor vehicle according to claim 13, wherein the ideal intersection curve is part of a perimeter of the hood (2).

15. The motor vehicle according to any one of the preceding claims, wherein the hood (2) and said portion (3b) have a first and a second outer surface (18, 19), respectively, wherein the wiper blade (26) in the first position is entirely aligned or lying above the first outer surface (18) or entirely in contact with the first outer surface (18).

16. The motor vehicle according to any of the preceding claims, wherein the hood (2) is a front hood and wherein the window (3) is a windshield, and/or wherein the hood (2) and the window (3) are separated from each other along the longitudinal axis (X) by a gap (4).
